# EUROPÄISCHE PATENTSCHRIFT

(11) **EP 1 503 972 B1**
(45) Veröffentlichungstag und Bekanntmachung des Hinweises auf die Patenterteilung: **16.11.2005**
(21) Anmeldenummer: 03740005.8
(22) Anmeldetag: 14.05.2003
(51) Int. Cl.: C04B 38/00, C04B 35/636

(54) **VERFAHREN ZUR HERSTELLUNG SPHÄRISCHER, HYBRIDISCHER FORMKÖRPER AUS LÖSLICHEN POLYMEREN**
METHOD FOR THE PRODUCTION OF HYBRID SPHERICAL MOLDED BODIES FROM SOLUBLE POLYMERS
PROCEDE DE PRODUCTION DE CORPS FA ONNES SPHERIQUES HYBRIDES A PARTIR DE POLYMERES SOLUBLES

(30) Priorität: 15.05.2002 DE 10221537
(43) Veröffentlichungstag der Anmeldung: 09.02.2005
(73) Patentinhaber: THÜRINGISCHES INSTITUT FÜR TEXTIL- UND KUNSTSTOFF-FORSCHUNG e.V., 07407 Rudolstadt (DE)
(72) Erfinder: SCHULZE, Thomas, 07407 Rudolstadt (DE); MORITZ, Tassilo, 01277 Dresden (DE)
(74) Vertreter: Wagner, Gerd
(86) Internationale Anmeldenummer: PCT/DE2003/001559
(87) Internationale Veröffentlichungsnummer: WO 2003/097558

(56) Entgegenhaltungen:
- EP-A- 0 712 889
- EP-A- 0 844 221
- WO-A-03/024890
- WO-A-03/024891
- US-A- 5 827 797

## Beschreibung

Das erfindungsgemäße Verfahren betrifft die Herstellung sphärischer Formkörper, auch hybridischer Natur, aus löslichen Polymeren aus der Gruppe der Polysaccharide (Stärke, Dextran), bevorzugt Cellulose und mindestens einem Zusatzstoff. Die zusatzstoffbeladene Polymerlösung wird in einem inerten Lösungsmittel dispergiert, die entstandene Partikeldispersion unterhalb des Erstarrungspunktes abgekühlt. Die stabilisierten Polymerlösungspartikel werden vom inerten Lösungsmittel abgetrennt und die separierten Polymerlösungspartikel in einem das Polymer koagulierenden Lösungsmittel gefällt.

### [Stand der Technik]

Kleindimensionierte Partikel aller Größenklassen haben sich in den letzten Jahrzehnten einen festen Platz in unzähligen industriellen Anwendungen gesichert. Neben einer Vielzahl polymerer Matrizes sind heute bereits eine große Anzahl von anorganischen Materialien kommerziell verfügbar. Die Vielfalt der möglichen Anwendungen in industriellen Prozessen der Biotechnologie, Trenntechnik und moderner Reaktionstechnik eröffnen diesen Materialien ständig neue Felder.

Nicht nur die Art der verwendeten Stoffe, sondern auch deren Form stellen neue Herausforderungen für Entwicklungen dar. So werden verstärkt ideal sphärische Partikel nachgefragt, welche die Forderung nach z.B. optimaler Packung in Schüttungen oder einheitlichem Wirbelverhalten in Wirbelschichten erfüllen können. Für großdimensionierte Kolonnen ist darüber hinaus die Druckbeständigkeit von entscheidender Bedeutung. Die Herstellung kleindimensionierter, sphärischer, anorganischer Partikel erfolgt nach verschiedensten Herstellungsverfahren. Grundsätzlich dominieren dabei zwei Richtungen, zum einen die Perlenbildung über Dispergieren von gefüllten Polymerlösungen, zum anderen die Verarbeitung von Solen und Gelen mit nachfolgender Kalzinierung. So werden beispielsweise gemäß EP 1108698 und EP 0353669 keramische Pulver polymergebunden in wässrigen Maischen eingearbeitet und diese in einer mit Wasser nicht mischbaren Flüssigkeit dispergiert. Andere Anmeldungen (US 5384290, EP 0300543, EP 0369638) beschreiben die Perlenbildung mittels schäumbarer Prepolymere, welche nach der Perlenbildung selbst zur Verfestigung der Struktur eingesetzt werden. Weiterhin zeugen auch eine große Anzahl von Patenten auf Basis der Sol-Gel-Technik von der Bedeutung diese Technologie zur Herstellung keramischer Formkörper (z.B. US 5064783, EP 0745557).

Im Hinblick auf Formtreue und Einfachheit der Prozeßführung stellen klassische Formungstechnologien über z.B. polymergebundene Partikelsuspensionen bislang keine geeignete Alternative dar, zumal die Partikelgröße durch prozeßbedingte Faktoren nach unten hin stark begrenzt ist. Andere bekannte Polymerformungstechnologien wie Schmelzen/Erstarren (Polyamid) oder chemische Modifizierung /Regeneration (Viskose-Verfahren, Carbamat-Verfahren) erlauben nicht jene hohe Beladung an Zusatzstoffen, die zu einer formstabilen Verarbeitung notwendig ist. Sol-Gel-Technologien können in dem angestrebten Partikeldurchmesserbereich keine ausreichende Formstabilität gewährleisten, da hierbei der Übergang vom stabilisierten Gelzustand in die z.B. oxidische Keramik mit einem hohen Masseverlust und resultierender hoher Porosität verbunden ist.

Die Lyocell-Technologie hat sich im Hinblick auf Einfachheit und Leistungsfähigkeit hierbei als außerordentlich geeignet herausgestellt. Wie bereits in DE 197 55 352 C1 und DE 197 55 353 C1 beschrieben, ergeben Techniken wie die Dispergierung von Celluloselösungen in inerten, die Cellulose nicht fällenden, Trägermedien oder das Strahlschneiden von Celluloselösungen sphärische Partikel in einem weiten Korngrößenbereich.

Es konnte weiterhin in DE 199 10 012 Cl (WO 00 538 33) gezeigt werden, dass Lösungen von Cellulose in N-Methylmorpholin-N-oxid Monohydrat eine sehr große Aufnahmekapazität für Fremdstoffe besitzen. Hierbei können mit Zusätzen hoher Dichten Beladungsverhältnisse Cellulose : Zusatzstoff von mehr als 1 : 5 realisiert werden. Solche Lösungen zeigen auch bei Beladungen von einem Mehrfachen der Cellulosemasse ein noch sehr gutes Fadenbildungsvermögen und können somit problemlos zu gestreckten Formkörpern (Fasern, Filamenten) extrudiert oder zu Folien gegossen werden.

Die Verformung von verschiedenartigen Materialien, welche bei niedrigen Temperaturen selbst keine Möglichkeiten der Verformung bieten (z.B. Metalle) oder keine derartigen Materialeigenschaften aufweisen, welche eine Eigenverformung auf Grund fehlender Bildsamkeit möglich machen würden (z.B. kristalline niedrigmolekulare Verbindungen, keramische Pulver) sind jedoch in dem genannten Stand der Technik nicht beschrieben.

### [Aufgabe der Erfindung]

Der Erfindung liegt die Aufgabe zugrunde ein Verfahren zu entwickeln, welches diese Verformung von verschiedenartigen Materialien gestattet und dabei vor allem die Stabilitätsprobleme bei der thermischen Behandlung löst, da zu geringe Packungsdichten vor allem nach der Pyrolyse des Binders zum Strukturzusammenbruch führen können. Weiterhin führen Dichtegradienten, welche durch eine inhomogene Packung der Partikel verursacht werden und eingeschlossene Luftblasen zu erheblichen Festigkeitsschwankungen der gesinterten Endprodukte und stellen vor allem bei hochfesten Keramikformkörpern potenzielle Bruchstellen dar. Im engen Zusammenhang damit steht die Aufgabe sicherzustellen, dass die gebildeten Partikel in den nachfolgenden Verarbeitungsstufen neben der einsetzenden Schrumpfung keine weiteren Formveränderungen erfahren.

Diese Aufgabe wird dadurch gelöst, dass man das lösliche Polymer aus der Gruppe der Polysaccharide, bevorzugt Cellulose, mit den entsprechenden Zusatzstoffen, organisch oder anorganisch, niedrigmolekular oder hochmolekular, thermisch stabil oder zersetzlich und sinterfähig, wie beispielsweise keramische Pulver, in N-Methylmorpholin-N-oxid Monohydrat löst {dispergiert}, welches mit der Lösung nicht mischbar ist, nicht fällend auf die Cellulose wirkt und keine chemische Wechselwirkungen mit der Cellulose und den Zusatzstoffen eingeht, und dieses erfindungsgemäß unter vermindertem Druck geschieht, anschließend die entstandene Dispersion abkühlt, wobei die Lösungstropfen erstarren, sich die erstarrten Lösungstropfen vollständig vom Trägermedium abtrennen, die so verformte Polymerlösung in ein fällendes Medium bringt, wobei die vorgebildete sphärische Form der Lösungstropfen permanent stabilisiert wird, die erhaltenen hochgequollenen Partikel gegebenenfalls mit in Wasser oder organischen Lösungsmitteln gelösten Verbindungen tränkt, und erfindungsgemäß weiter die lösungsmittelfeuchten Polymerpartikel bis zur höchstmöglichen Verdichtung trocknet und im Falle der Herstellung poröser oder hochverdichteter Formkörper, beispielsweise keramischer Perlen, die gebildeten Partikel aus Polymer und Zusatzstoff anschließend einer thermischen Behandlung bzw. Sinterung unterwirft.

In dem erfindungsgemäßen Verfahren werden die Vorteile der bereits beschriebenen Perlenformung mittels der Lyocell-Technologie und die Möglichkeiten einer hohen Überladung der Celluloselösungen miteinander kombiniert. Überraschenderweise wurde dabei gefunden, dass sich auch hochgefüllte Lösungen mit Beladungsgraten von Cellulose-Zusatzstoff-Verhältnis von mehr als 1 : 7 (Masseanteile) zu sphärischen Formkörpern hoher Stabilität verformen lassen, wo eine Extrusion der Lösung durch Ring- oder Spaltdüsen bereits deutlich an ihre Grenzen stößt. Weiterhin wurde gefunden, dass die gebildeten Formkörper in den nachfolgenden Verarbeitungsstufen, vorrangig aber in der thermischen Behandlung, weiterhin auch formstabil bleiben, das Ausbrennen der tragenden Cellulosematrix (Entbindern) selbst in Mehrfachlagen unter Einkwirkung des Eigengewichts des Haufwerkes überstehen und anschließend bis nahe der theoretischen Dichte des entsprechenden Zusatzstoffes durch einen Sinterprozeß verdichtet werden können.

Wie bereits in DE 199 10 012 C1 beschrieben, werden die erforderlichen Cellulose-Lösungen aus lufttrockener Cellulose, einer wässrigen N-Methylmorpholin-N-oxid-Lösung und dem entsprechenden Zusatzstoff hergestellt. Als Zusatzstoffe eignen sich alle Substanzen, welche mechanisch fein genug aufgeschlossen sind oder sich im Prozeß der Lösungsherstellung mit auflösen, keine Wechselwirkung mit dem organischen Lösungsmittel, der Cellulose oder Wasser zeigen, welche die fast ausschließlich wässrige Aufarbeitung ohne Veränderung überstehen und nicht übermäßig durch Extraktionsprozesse abgereichert werden, für den Anwendungsfall keramischer Formkörper eine ausreichende Sinteraktivität besitzen,

Für den Fall anorganisch gefüllter Formkörper kann in Abhängigkeit von der Dichte der eingesetzten Stoffe und dem jeweiligen Verwendungszweck ein Beladungsverhältnis von Cellulose : Zusatzstoff = 1 : 1 bis 1 : 8, vorzugsweise zwischen 1 : 3 und 1 : 6, eingestellt werden. Dieses Verhältnis kann soweit variiert werden, wie es die Stabilität der Formkörper nach der Entbinderung erlaubt, wobei mit einem Verhältnis von beispielsweise 6 Teilen Zusatzstoff auf 1 Teil Cellulose 15 Ma.-% Cellulose die tragende Matrix für 85 Ma.-% Zusatzstoff bilden. Damit kann über den Beladungsgrad sehr einfach die Dichte der Formkörper eingestellt werden. Hohe Beladungsgrade ergeben Dichten, welche von anderen drucklosen Keramikformungsverfahren bei einer polymergebundenen Formung (Schlickergießen) kaum erreicht werden. Bei niedrigen Beladungen hingegen wird nach dem Ausbrennen der tragenden Cellulose ein offenporiges Netzwerk gebildet, welches zu porösen Formkörpern mit gezielt einstellbarer Porosität gesintert werden kann. Weiterhin sind Mischungen von Zusatzstoffen möglich, welche z.B. die Sinteraktivität verbessern, während der thermischen Behandlung Reaktionen eingehen, z.B. die Bildung katalytisch aktiver Metallschichten oder selbst mit dem Zusatzstoff reagieren, z.B. Mischphasenbildung. Unter Einhaltung der oben genannten Voraussetzungen können auch Verbindungen eingearbeitet werden, welche erst bei thermischer Beanspruchung stabile Phasen ausbilden oder die grundsätzlich im Polymernetzwerk für eine spätere Anwendung verankert werden sollen, ohne dass eine Pyrolyse des tragenden Polymeren stattfindet.

Die Viskosität der Celluloselösungen wird durch die Cellulosekonzentration und die Zusatzstoffe sehr stark beeinflußt. Im erfindungsgemäßen Verfahren kommen Celluloselösungen zum Einsatz, welche Konzentrationen an Cellulose von 1,5 bis 15 Ma.-%, vorzugsweise 3 - 9 Ma.-%, aufweisen. Dazu kommt bei hohen Beladungsgraden eine starke Viskositätszunahme, welche einen entscheidenden Einfluß auf die nachfolgende Dispergierung und das damit erreichbare Partikelspektrum aufweist.

Die beladenen Celluloselösungen werden im erfindungsgemäßen Verfahren in einem Lösungsmittel bei erhöhten Temperaturen zu sphärischen Gebilden verformt. Hierfür eignen sich alle Flüssigkeiten, welche nicht zur sofortigen Ausfällung der Cellulose, (Wasser, Alkohole) oder zum Entzug des organischen Lösungsmittels führen (DMF, Essigester) und welche eine stabile Dispersion mit der Lösung bilden können. Bewährt haben sich Mineralöle, Silikonöle, native Pflanzenöle, Wachse und Paraffine, sowie Mischungen aus Biphenyl und Diphenylether.

Die Lösungstropfen werden unter mechanischem Energieeintrag fein im Trägermedium verteilt, wobei sie eine ideal sphärische Form annehmen. Hierzu eignen sich alle Rührerformen, welche eine geringe Scherung in der Rührzone aufweisen, dafür aber eine feine Wirbelballenbildung gewährleisten, z.B. Propellerrührer, Blattrührer, Ankerrührer. Es wurde überraschenderweise gefunden, dass selbst extrem viskose Lösungen durch geringen mechanischen Energieeintrag sicher zu Perlen verformt und in stabilen Dispersion gehalten werden können.

Die anzuwendenden Drehzahlen richten sich nach der Dichte der Lösung und der des Trägermediums und liegen im Bereich zwischen 100 und 10.000 min⁻¹, vorzugsweise zwischen 250 und 3000 min⁻¹. Das Flottenverhältnis (Beladung des Trägermediums mit Celluloselösung) kann zwischen 0,01 und 0,5, vorzugsweise 0,07 - 0,4 liegen. Die Dispergiertemperatur sollte über dem Schmelzpunkt der Celluloselösting liegen, kann aber bei Kurzzeitdispergierung diesen auch unterschreiten. Vorzugsweise wird die Dispergierung bei 75 bis 100°C durchgeführt.

Es werden in Abhängigkeit von den Rührparametern, dem Druck im Rührgefäß, dem Flottenverhältnis, der Temperatur und den Eigenschaften (Beladung, viskosität) der Celluloselösung sphärische Partikel im Größenbereich zwischen 1 und 1000 µm, vorzugsweise 50 - 500 µm, erhalten. Bekanntermaßen erfolgt bei vielen Dispergierprozessen trotz getroffener Maßnahmen durch Oberflächenturbulenzen ein Gasein-trag in die Dispersion. Im erfindungsgemäßen Verfahren wird dieses Problem dadurch umgangen, dass man unter vermindertem Druck arbeitet. Dabei werden sowohl die Cellulose-Lösung, als auch das Trägermedium vor und während der Dispergierung ständig entgast, so dass keine Gasblasen in der Erstarrungspahse in die Perlen gelangen können.

Wird die Dispersion dann unter Rühren unterhalb der Erstarrungstemperatur der Celluloselösung abgekühlt, bleibt die sphärische Form der Lösung zunächst erhalten. Nach dem Abtrennen des Trägermediums, im einfachsten Falle durch Dekantieren und Filtrieren, erfolgt die Formstabilisierung durch Koagulation in einem fällenden Agens, vorzugsweise Wasser, welches im Bedarfsfalle mit Zusätzen versehen sein kann. Zur Modifizierung der Fällung können auch niedere Alkohole verwendet werden.

Die so hergestellten gefüllten Celluloseperlen stellen hochgequollene Gebilde von amorpher Cellulose dar, in welcher die Zusatzstoffe feinverteilt vorliegen. In diesem Verarbeitungsschritt kann bei Bedarf auch eine zusätzliche Tränkung mit modifizierenden Agenzien vorgenommen werden. Dies ist vor allem dann von Vorteil, wenn der betreffende Stoff wasserlöslich oder anderweitig inkompatibel zum verwendeten aminischen Lösungsmittel ist. Hiermit lassen sich auch nachträglich noch erhebliche Mengen von Verbindungen in das Cellulosenetzwerk einbauen oder bereits vorhandene Zusatzstoffe modifizieren. Denkbar sind hier vor allem das Tränken mit Metallsalz-Lösungen oder Solen, im einfachsten Falle, aber,auch ein Eluieren mit gelösten organischen Verbindungen, gegebenenfalls nach-Lösungsmittelaustausch.

Im nachfolgenden Trocknungsschritt kommt es zur starken Anreicherung der Zusatzstoffe und durch den einsetzenden Schrumpf der Cellulose zu einer erheblichen Verdichtung. Überraschenderweise wurde dabei gefunden, dass bei diesem Schrumpfungsprozeß die im Dispergierprozeß voreingestellte Form der Partikel erhalten bleibt. Zuzüglich der Formkonsolidierung und Verdichtung werden selbst wasserlösliche Zusatzstoffe fest in der nun kristallisierenden Cellulosematrix eingebunden, was beispielsweise für controlled-release-Anwendungen von Wirkstoffen von großem Vorteil ist. Dieser Vorgang hat seine Ursache darin, dass der Übergang von der amorphen zur kristallinen Cellulose mit einer irreversiblen Kristallisation verbunden ist, wobei einmal eingeschlossene Verbindungen fester an das Netzwerk gebunden werden, als es durch die Tränkung von z.B. angequollener Cellulose erreicht werden würde.

Die Trennung der sphärischen Partikel erfolgt entweder durch Naß-, bevorzugt aber durch Trockensiebung oder -sichtung in Kornklassen definierter Zusammensetzung. Durch die Wahl der Rührparameter kann das erhaltene Partikelspektrum sehr eng verteilt sein, so dass ein nur geringer Trennungsaufwand besteht.

Die erhaltenen sphärischen Formkörper stellen Komposite aus vorzugsweise Cellulose mit Zusatzstoffen dar und stehen in dieser Form bereits für die Anwendung bzw. Weiterverarbeitung zur Verfügung.

Im Wesentlichen werden sie als Grünkörper zur Herstellung keramischer Perlen genutzt, welche als Mahlgranulate, chromatografische Trägermedien, Katalysatorträger und hitzesterilisierbare Beads für medizinische Zwecke Anwendung finden können. Darüber hinaus besitzen zusatzstoffbeladene reine Celluloseperlen ein großes Nutzungspotential in beispielsweise controlled-release-Anwendungen bei der Freisetzung von Wirkstoffen im medizinischen Bereich.

Die Erfindung wird durch nachfolgend aufgeführte Beispiele näher erläutert.

### [Beispiele]

### Beispiel 1

In 500 g einer 50%igen wässrigen Lösung von N-Methylmorpholin-N-oxid werden 20 g eines Baumwoll-Linterszellstoffes (DP 477) und 100 g Aluminiumoxid (d₅₀ = 0,7, µm) gegeben. Unter intensiver Verknetung wird im Vakuum bei 50 mbar und 85°C solange Wasser abdestilliert, bis sich eine homogene, viskose Lösung gebildet hat. Die noch flüssige Celluloselösung wird mit 927 g dickflüssigem Paraffinöl (100 mPa • s) überschichtet und 5 min bei 1500 min⁻¹ mit einem Propellerrührer gerührt. Danach erfolgt eine schnell Abkühlung unter konstantem Rühren, bis die zu Perlen geformte Lösung erstarrt. Nach dem Absetzen wird dekantiert, vom überschüssigen Öl abgesaugt und anschließend in warmen Wasser gefällt. Nach mehreren Waschvorgängen mit heißem Wasser werden noch anhaftende Ölreste durch Heißextraktion mit tert.-Butanol entfernt und anschließend schonend getrocknet. Es werden hochgefüllte Perlen mit einem Anteil an Füllstoff von 83 % und in einem Durchmesserbereich von 100 - 500 µm erhalten. Das Ausbrennen der Cellulose und eine nachfolgende Sinterung bei 1700°C führen zu dichten, harten Korund-Perlen.

### Beispiel 2

11,3 kg Silikonöl (250 mPa • s) werden in einem beheizbaren Rührkessel bei Raumtemperatur vorgelegt. Da hinein werden 2 kg einer festen 8 Ma.-%igen Celluloselösung gegeben, welche im Verhältnis Cellulose : Titandioxid = 1 : 8 gefüllt ist. Das System wird luftdicht verschlossen und auf 90°C geheizt. Nachdem die Lösung vollständig aufgeschmolzen ist, wird 30 min bei einer Drehzahl von 800 min⁻¹ und einem Druck von 0,1 mbar gerührt und nach Abschalten der Heizung bis zur Erstarrung die Drehzahl stufenweise auf 2000 min⁻¹ erhöht. Die erhaltenen Perlen werden abfiltriert, in heißem Wasser gefällt und dreimal mit heißem Wasser gewaschen. Reste an Silikonöl werden durch Waschen mit Ethanol entfernt. Die nachfolgende Trocknung ergibt TiO₂-gefüllte Perlen mit einem Titandioxidanteil von 89%. Die Partikeldurchmesser liegen zwischen 20 und 150 µm. Die thermische Behandlung bei 1400°C führt zu keramischen Perlen aus Titandioxid.

### Beispiel 3

5 kg einer eutektischen Mischung aus Diphenylether und Biphenyl werden mit 2,3 kg einer Lösung bestehend aus 102 g Cellulose (Cellunier F), 1950 g N-Methylmorpho-lin-N-oxid Monohydrat und 255 g Borcarbid (d₅₀ = 1 µm) versetzt und auf 75°C erwärmt. Mittels 4-Blattrührer und Ultraschallhorn wird die aufgeschmolzene Lösung innerhalb 10 min bei 1 mbar dispergiert und nach Abschalten des Ultraschallgebers unter Rühren schnell auf 20°C abgekühlt, wobei eine Erstarrung der gebildeten Partikel einsetzt. Nach dem Absetzen werden sie bei 40°C filtriert und der Filterkuchen mit iso-Propanol nachgewaschen. Die Fällung erfolgt in warmen Wasser und nach mehrfacher Extraktion des anhaftenden Lösungsmittels können die gebildeten Beads getrocknet werden. Nach der drucklosen Sinterung bei 2150°C werden dunkel gefärbte, harte Perlen aus Borcarbid gebildet.

### Beispiel 4

Mittels Kolbenspinnvorrichtung werden innerhalb von 30 min 513 g einer Celluloselösung, welche zu 75 % aus N-Methylmorpholin-N-oxid Monohydrat, 8,5 % Cellulose und 16,5 % Zirkonoxid besteht, in 2 kg hochviskoses Paraffinöl, welches auf 25°C thermostatisiert ist, unter starkem Rühren (3000 min⁻¹) und einem Druck von 0,5 mbar eingespritzt. Dabei erfolgt eine Erstarrung der sich bildenden sphärischen Partikel, welche abgesaugt und in warmem Wasser koaguliert werden. Nach mehrmaligem Waschen mit Wasser und Ethanol wird schonend getrocknet. Es werden Perlen aus Cellulose mit eingelagerten Zirkonoxid-Partikeln in einem Größenbereich von 100 - 700 µm erhalten. Nach Entbinderung und Sinterung bei 1500 °C ergeben sich harte, druckbeständige Kugeln aus Zirkonoxid.

### Beispiel 5

Aus einer 7,5 Ma.%igen Lösung von Cellulose, welche auf einen Masseteil Cellulose ein Masseteil Aluminiumoxid enthält, werden, bei einem Druck von 5 mbar, durch Rühren in erwärmten Paraffinöl sphärische Formkörper im Durchmesserbereich 50 - 250 µm hergestellt. Diese werden vom Trägermedium abgetrennt, koaguliert und durch mehrfaches Waschen und abschließender Extraktion von Paraffinresten befreit. Die noch feuchten Perlen werden für 30 min in einer 5 Ma.-%igen Lösung von Hexachloroplatinsäure gelagert, abgefiltriert und getrocknet. Nach der Entbinderung und Sinterung unter Luftatmosphäre werden poröse Perlen aus Aluminiumoxid mit eingelagerten, feinver-teiltem Platinoxid erhalten.

### Beispiel 6

Aus einer 6 Ma.-%igen Cellulose-Lösung, welche 10 MasseprozentGlucose enthält, werden gemäß DE 197 55 352 C1, unter einem Druck von 0,1 mbar, cellulosische Beads hergestellt.

Nach der Fällung und Extraktion werden die feuchten Beads für 30 min mit einer konzentrierten Lösung von Nickelsulfat behandelt und anschließend getrocknet. Die thermische Behandlung erfolgt unter Ausschluß von Sauerstoff im Inertgasstrom. Dabei bilden sich poröse Partikel mit eingelagertem feinver-teiltem Nickeloxidanteil.

### Beispiel 7

200 g einer 7,5 Ma.-%igen Cellulose-Lösung, welche 30 Masseprozent Stärke enthält, werden in 2300 g hochviskosem Paraffinöl bei 80°C aufgeschmolzen und anschließend 15 min bei 0,01 mbar Druck mit einem Propellerrührer zu feinen Lösungstropfen verteilt. Die abgesetzte Partikelsuspension wird separiert, entölt und in warmen Wasser koaguliert. Nach der Extraktion mit tert. Butanol werden die feuchten Celluloseperlen 120 min in einer 10 Ma.-%igen Lösung von Acetylsalicylsäure in wässrigem Ethanol getränkt, abfiltriert und abschließend getrocknet. Es ergeben sich formstabile Cellulosebeads mit eingelagerter Acetylsalicylsäure.

## Patentansprüche

1. Verfahren zur Herstellung sphärischer Formkörper, auch hybridischer Natur, aus löslichen Polymeren aus der Gruppe der Polysaccharide (Stärke, Dextran), bevorzugt Cellulose und mindestens einem eingelagerten Zusatzstoff, indem man die zusatzstoffbeladene Polymerlösung in einem inerten Lösungsmittel dispergiert, die entstandene Partikeldispersion unterhalb des Erstarrungspunkts der Polymerlösung abkühlt, die stabilisierten Polymerlösungspartikel vom inerten Lösungsmittel abtrennt, die separierten Polymerlösungspartikel in einem:das Polymer koagulierenden Lösungsmittel fällt, **dadurch gekennzeichnet, dass** man
a) den Dispergierprozeß bei reduziertem Druck durchführt,
b) die lösungsmittelfeuchten Polymerpartikel einem Trocknungsprozeß bis zur höchstmöglichen Verdichtung unterwirft und
c) im Falle der Herstellung poröser oder hochverdichteter Formkörper, beispielsweise keramischer Perlen, die gebildeten Partikel aus Polymer und Zusatzstoff anschließend einer thermischen Behandlung/Sinterung unterwirft.

2. Verfahren nach Anspruch 1, **dadurch gekennzeichnet, dass** man den Dispergierprozeß im Vakuum zwischen 10⁻⁴ und 100 mbar, bevorzugt zwischen 0,01 und 1 mbar, durchführt.

3. Verfahren nach Anspruch 1 und 2, **dadurch gekennzeichnet, dass** man den Rührprozeß vollständig oder teilweise unter Vakuum durchführt.

4. Verfahren nach einem der Ansprüche 1 bis 3, **dadurch gekennzeichnet, dass** man das Polymer in einem aminischen Lösungsmittel, vorzugsweise N-Methylmorpholin-N-oxid, löst.

5. Verfahren nach einem der Ansprüche 1 bis 4, **dadurch gekennzeichnet, dass** die Polymerlösung mindestens einen Zusatzstoff im Bereich von 0,01 bis 1000 Ma.-%, vorzugsweise zwischen 5 und 700 Ma.-%, bezogen auf den Polymeranteil enthält.

6. Verfahren nach einem der Ansprüche 1 bis 5, **dadurch gekennzeichnet, dass** der/die Zusatzstoff(e) im inerten Lösungsmittel schwer oder unlöslich sind.

7. Verfahren nach einem der Ansprüche 1 bis 6, **dadurch gekennzeichnet, dass** der/die Zusatzstoff(e) organisch oder anorganisch, niedrigmolekular oder hochmolekular, thermisch stabil oder zersetzlich und sinterfähig, wie beispielsweise keramische Pulver, sind.

8. Verfahren nach einem der Ansprüche 1 bis 7, **dadurch gekennzeichnet, dass** der/die Zusatzstoff(e) eine Partikelgröße von 10 nm bis 1000 µm, vorzugsweise 50 nm bis 5 µm, aufweist(en).

9. Verfahren nach einem der Ansprüche 1 bis 8, **dadurch gekennzeichnet, dass** das inerte Lösungsmittel aus der Gruppe der gesättigten aliphatischen oder ungesättigten aromatischen Kohlenwasserstoffe, gesättigten und ungesättigten Fettsäureester und linearen sowie cyclischen Polysiloxane ist.

10. Verfahren nach Anspruch 1 und 9, **dadurch gekennzeichnet, dass** man zum Energieeintrag bei der Formung der sphärischen Partikel aus der feststoffbeladenen Polymerlösung, Rührersysteme im Drehzahlbereich zwischen 10 und 20.000 min⁻¹ einsetzt.

11. Verfahren nach einem der Ansprüche 1 bis 10, **dadurch gekennzeichnet, dass** man zur Stabilisierung der sphärischen Formkörper die Dispersion auf eine Temperatur von 60 bis - 10°C, vorzugsweise 0 bis 10°C, kühlt.

12. Verfahren nach einem der Ansprüche 1 bis 11, **dadurch gekennzeichnet, dass** das koagulierende Medium vorzugsweise Wasser ist.

13. Verfahren nach einem der Ansprüche 1 bis 12, **dadurch gekennzeichnet, dass** bei der thermischen Behandlung die tragende Polymermatrix rückstandsfrei pyrolysiert wird.

14. Verfahren nach mindestens einem der Ansprüche 1 bis 13, **dadurch gekennzeichnet, dass** die porösen oder dichten Formkörper eine oder mehrere Substanzen enthalten können, welche funktionelle Eigenschaften, wie beispielsweise elektrische, magnetische oder katalytische Aktivität, besitzen.

15. Verfahren nach mindestens einem der Ansprüche 1 bis 14, **dadurch gekennzeichnet, dass** eine zweite oder weitere Substanz(en) bereits vor der Dispergierung in die Polymerlösung eingearbeitet wird.

16. Verfahren nach mindestens einem der Ansprüche 1 bis 15, **dadurch gekennzeichnet, dass** die zweite oder weitere Substanz(en) nachträglich in die noch lösungsmittelfeuchten sphärischen Formkörper eingearbeitet wird.

## Claims

1. Method for producing spherical molded bodies, also of hybrid nature, from soluble polymers from the group of polysaccharide (starch, dextran), preferably cellulose and at least one embedded additive, in that the additive loaded polymer solution is dispersed in an inert solvent, the resulting particle dispersion is cooled to a temperature below the solidification point of the polymer solution, the stabilized particles of the polymer solution are separated from the inert solvent, the separated particles of the polymer solution are precipitated in a solvent coagulating the polymer,
**characterized in that**
a) the dispersing process is carried out at a reduced pressure,
b) the solvent-moistened polymer particles are subjected to a drying process until the maximal densification is obtained, and
c) in the case of manufacturing porous or highly condensed molded bodies, for example, ceramic beads, the formed particles out of polymer and additive are subsequently subjected to a thermal treatment/ sintering.

2. Method as claimed in claim 1, **characterized in that** the dispersion process is carried out in vacuum between 10⁻⁴ and 100 millibar, preferably between 0.01 and 1 millibar.

3. Method as claimed in claims 1 and 2, **characterized in that** the stirring process is performed entirely or partially under vacuum.

4. Method as claimed in one of the claims 1 to 3, **characterized in that** the polymer is solved in an amino solvent, preferably in N-methylmorpholin-N-oxid.

5. Method as claimed in one of the claims 1 to 4, **characterized in that** the polymer solution contains at least one additive in the range of from 0.01 to 1000 weight-%, preferably between 5 and 700 weight-%, related to the part or the polymer.

6. Method as claimed in one of the claims 1 to 5, **characterized in that** the additive/s is/are scarcely soluble or insoluble in the inert solvent.

7. Method as claimed in one of the claims 1 to 6, **characterized in that** the additive/s is/are organic or inorganic, low-molecular or high-molecular, thermally stable or decomposable and capable of sintering such as, for example, ceramic powder.

8. Method as claimed in one of the claims 1 to 7, **characterized in that** the additive/s has/have a size of particles of from 10 µm to 1000 µm, preferably 50 µm to 5 µm.

9. Method as claimed in one of the claims 1 to 8, **characterized in that** the inert solvent is from the group of the saturated aliphatic or unsaturated aromatic hydrocarbon, from the saturated and unsaturated fatty acid esters and linear as well as cyclic polysiloxane.

10. Method as claimed in claims 1 and 9, **characterized in that** stirrer systems in the range of rotation numbers of between 10 and 20.000 rpm are employed for the energy input when forming the spherical particles from the solid loaded polymer solution.

11. Method as claimed in one of the claims 1 to 10, **characterized in that** the dispersion is cooled down to a temperature of from 60 to -10°C, preferably 0 to 10°C for stabilizing the spherical molded bodies.

12. Method as claimed in one of the claims 1 to 11, **characterized in that** the coagulating medium is preferably water.

13. Method as claimed in one of the claims 1 to 12, **characterized in that** the supporting polymer matrix is pyrolized without residue at the thermal treatment.

14. Method as claimed in at least one of the claims 1 to 13, **characterized in that** the porous or dense molded bodies can include one substance or more with inherent functional properties such as, for example, electric, magnetic, or catalytic activities.

15. Method as claimed in at least one of the claims 1 to 14, **characterized in that** a second or further substance/s is/are worked into the polymer solution prior to dispersing.

16. Method as claimed in at least one of the claims 1 to 15, **characterized in that** the second or further substance/s is/are afterwards worked into the still solution moistened spherical molded bodies.

## Revendications

1. Procédé pour la production de corps façonnés sphériques, aussi de nature hybride, à partir de polymères solubles du groupe des polysaccharides (amidon, dextrane), de préférence de cellulose, et d'au moins un additif incorporé, par le fait que la solution de polymère chargée de l'additif est dispersée dans un solvant inerte, que la dispersion obtenue de particules est refroidie à une température au-dessous du point de solidification de la solution de polymère, que les particules stabilisées de la solution de polymère sont séparées dudit solvant inerte, que les particules séparées de solution de polymère sont précipitées dans un solvant coagulant le polymère, **caractérisé par le fait que**
a) le processus de dispersion est mis en oeuvre à une pression réduite,
b) les particules de polymère mouillées de solvant sont soumises à un processus de séchage jusqu'à ce que la densification la plus grande possible soit atteinte, et que,
c) dans le cas de la production de corps façonnés poreux ou fortement comprimés, par exemple de perles céramiques, les particules formées en polymère et en additif sont soumises ensuite à un traitement thermique/frittage.

2. Procédé selon la revendication 1, **caractérisé par le fait que** le processus de dispersion est mis en oeuvre dans le vide entre 10⁻⁴ et 100 mbars, de préférence entre 0,01 et 1 mbar.

3. Procédé selon la revendication 1 et 2, **caractérisé par le fait que** le processus d'agitation est réalisé complètement ou en partie sous vide.

4. Procédé selon l'une des revendications 1 à 3, **caractérisé par le fait que** le polymère est dissous dans un solvant aminique, de préférence dans du N-méthylmorpholine-N-oxyde.

5. Procédé selon l'une des revendications 1 à 4, **caractérisé par le fait que** la solution de polymère comprend au moins un additif dans la gamme comprise entre 0,01 et 1000 % en masse, de préférence entre 5 et 700 % en masse, par rapport à la part du polymère.

6. Procédé selon l'une des revendications 1 à 5, **caractérisé par le fait que** le/les additif(s) est/sont difficilement soluble(s) ou insoluble(s) dans le solvant inerte.

7. Procédé selon l'une des revendications 1 à 6, **caractérisé par le fait que** le/les additif(s) est/sont organique(s) ou inorganique(s), de faible poids moléculaire ou de poids moléculaire élevé, thermiquement stable(s) ou décomposable(s) et capable(s) d'être fritté(s), telles que les poudres céramiques par exemple.

8. Procédé selon l'une des revendications 1 à 7, **caractérisé par le fait que** le/les additif(s) présente(nt) une taille des particules qui est comprise entre 10 nm et 1000 µm, de préférence entre 50 nm et 5 µm.

9. Procédé selon l'une des revendications 1 à 8, **caractérisé par le fait que** le solvant inerte provient du groupe des hydrocarbures saturés aliphatiques ou insaturés aromatiques, des esters saturés et insaturés de l'acide gras et des polysiloxanes linéaires ainsi que cycliques.

10. Procédé selon la revendication 1 et 9, **caractérisé par le fait que** l'on utilise des systèmes d'agitation dans la gamme de vitesse de rotation comprise entre 10 et 20.000 min⁻¹ pour l'input d'énergie lors du façonnage des particules sphériques à partir de la solution de polymère chargée de matières solides.

11. Procédé selon l'une des revendications 1 à 10, **caractérisé par le fait que**, pour stabiliser les corps façonnés sphériques, la dispersion est refroidie à une température comprise entre 60 et -10°C, de préférence entre 0 et 10°C.

12. Procédé selon l'une des revendications 1 à 11, **caractérisé par le fait que** le milieu coagulant est de préférence de l'eau.

13. Procédé selon l'une des revendications 1 à 12, **caractérisé par le fait que**, lors du traitement thermique, la matrice polymère porteuse est pyrolysée sans aucun résidu.

14. Procédé selon l'une au moins des revendications 1 à 13, **caractérisé par le fait que** les corps façonnés poreux ou compacts peuvent contenir une ou plusieurs substance(s) qui présente(nt) des propriétés fonctionnelles, telles qu'une activité électrique, magnétique ou catalytique par exemple.

15. Procédé selon l'une au moins des revendications 1 à 14, **caractérisé par le fait qu'**une seconde ou d'autres substance(s) est ou bien sont incorporée(s) à la solution de polymère avant la dispersion déjà.

16. Procédé selon l'une au moins des revendications 1 à 15, **caractérisé par le fait que** la seconde ou les autres substance(s) est ou bien sont incorporée(s) ultérieurement aux corps façonnés sphériques encore mouillés de solvant.
